# FASCICULE DE BREVET EUROPEEN

(11) **EP 0 615 270 B1**
(45) Date de publication et mention de la délivrance du brevet: **07.01.1998**
(21) Numéro de dépôt: 94400497.7
(22) Date de dépôt: 08.03.1994
(51) Int. Cl.: H01J 29/00

(54) **Procédé de fabrication de boucle de démagnétisation et boucle obtenue par ce procédé**
Verfahren zur Herstellung einer Entmagnetisierungsspule und mittels dieses Verfahrens hergestellte Spule
Process for the manufacture of a demagnetising coil and a coil produced by this process

(30) Priorité: 12.03.1993 FR 9302870
(43) Date de publication de la demande: 14.09.1994
(73) Titulaire: THOMSON TELEVISION COMPONENTS FRANCE, 92400 Courbevoie (FR)
(72) Inventeur: Sey, Jean-Claude, F-92402 Courbevoie Cedex (FR); Vittoz, Daniel, F-92402 Courbevoie Cedex (FR); Lanaud, Christophe, F-92402 Courbevoie Cedex (FR)
(74) Mandataire: Ruellan-Lemonnier, Brigitte

(56) Documents cités:
- EP-A- 0 488 461

## Description

L'invention se rapporte aux boucles de démagnétisation destinées à l'équipement des tubes à rayons cathodiques pour la télévision en couleurs. La boucle de démagnétisation est constituée par un enroulement de fil électrique émaillé protégé par une gaine isolante thermosoudée. On la fixe contre la verrerie du tube image à masque et elle est reliée au circuit électrique du téléviseur par une paire de conducteurs se terminant par un connecteur bipolaire. Les conducteurs sont reliés électriquement aux deux extrémités de l'enroulement dans une région non recouverte par la gaine isolante. Cette région découverte est ensuite emprisonnée dans une enveloppe isolante qui assure la protection électrique et la tenue mécanique des pièces raccordées. L'enveloppe peut être constituée par un enrubannage ou par deux coquilles en résine organique de synthèse formant un boîtier d'interconnexion.

Un exemple d'enveloppe constituée par un enrubannage est présenté par le document EP 0 488 461 A1. Ce document présente figure **2** une réalisation dans laquelle un câble de raccordement **17** est connecté par deux connexions **19** aux extrémités **11** du câble **5** formant le bobinage de démagnétisation. Ce bobinage est entouré d'une feuille isolante **7**.

L'endroit où les extrémités **11** du câble **5** sortent de la feuille isolante **7** correspond à une zone **13** non recouverte par la feuille **7**. Une autre feuille **21** est utilisée pour enserrer les connexions **19,** la partie découverte **13** et une cloison séparatrice **25** des connexions **19**. La feuille **21** est fixée par thermosoudage à la feuille **7**, à la cloison **25** et au câble de raccordement **17**.

Les boucles fabriquées selon une telle technique d'enrubannage ou par pose d'un boîtier nécessitent un matériel dont le prix de revient et la difficulté de manipulation entraînent un surcoût non négligeable. Ces boucles peuvent présenter un défaut d'étanchéité au niveau de l'interconnexion et leur aspect esthétique laisse à désirer.

Pour pallier les inconvénients énumérés ci-dessus, le procédé selon la présente invention utilise une technique de moulage par injection de matière thermoplaste, qui vient remplacer le boîtier d'interconnexion en donnant naissance à une forme en gousset ou manchon qui constitue un isolateur électrique efficace et de plus un organe de liaison mécanique entre la boucle proprement dite et les fils de câblage isolés qui la relient au circuit du téléviseur ou du moniteur vidéo.

L'invention a pour objet un procédé de fabrication d'une boucle de démagnétisation comportant :
- un bobinage d'un câble électrique ayant deux extrémités non isolées,
- un organe de raccordement comprenant un câble bifilaire ayant deux extrémités dénudées,
- deux connexions électriques, chaque connexion raccordant une extrémité non isolée du bobinage à une extrémité dénudée de l'organe de raccordement,
- une gaine isolante tubulaire entourant le bobinage sur la presque totalité de son périmètre et laissant une zone découverte où émergent les extrémités non isolées,
- et une enveloppe d'isolation de la partie de boucle découverte et des connexions.

Le procédé de fabrication comportant les étapes de :
- réalisation du bobinage et de sa gaine isolante,
- réalisation des connexions électriques entre les extrémités non isolées du bobinage et l'organe de branchement,
et étant caractérisé en ce que le câble bifilaire de l'organe de raccordement est muni d'un isolant électrique formant d'une part une gaine autour de chacun des fils du câble et d'autre part d'un intercalaire reliant mécaniquement entre elles les gaines des fils et espaçant l'un de l'autre les deux fils du câble bifilaire, et en ce que la réalisation de l'enveloppe d'isolation de la partie de boucle découverte et des connexions est réalisée par surmoulage par injection à chaud dans un moule d'une matière isolante.

L'invention a également pour objet une boucle de démagnétisation comportant :
- un premier câble électrique isolé ayant deux extrémités non isolées et formant un bobinage,
- une première enveloppe isolante tubulaire couvrant la presque totalité du bobinage, mais laissant une zone découverte d'où émergent les extrémités non isolées,
- un organe de raccordement comportant un câble bifilaire ayant deux extrémités dénudées,
- deux connexions électriques, chaque connexion raccordant une extrémité non isolée du bobinage à une extrémité dénudée de l'organe de raccordement,
- une seconde enveloppe isolante enveloppant la partie découverte du bobinage et les deux connexions électriques.

La boucle de démagnétisation est caractérisée en ce que l'organe de raccordement comporte un câble bifilaire muni d'un isolant électrique formant d'une part une gaine autour de chacun des fils du câble bifilaire et d'autre part un intercalaire reliant mécaniquement les gaines des fils et espaçant l'un de l'autre les deux fils du câble bifilaire,cet intercalaire du câble bifilaire étant présent jusqu'au point où les deux fils sont dénudés et caractérisé également en ce que la seconde enveloppe est constituée par un bloc de matière isolante thermoplaste isolant électriquement l'une de l'autre les deux connexions électriques.

L'invention sera mieux comprise au moyen de la description ci-après et des figures annexées parmi lesquelles :

La figure 1 est une vue isométrique d'une boucle de démagnétisation de type connu.

La figure 2 est une vue isométrique d'une boucle selon l'invention, en cours de fabrication.

La figure 3 est une vue isométrique d'un demi-moule utilisé pour une opération de prémoulage à chaud.

La figure 4 est une vue isométrique montrant le produit intermédiaire obtenu au sortir du moule de la figure 3 et la structure d'un demi-moule utilisé pour le surmoulage final.

La figure 5 montre une partie de la boucle de démagnétisation selon l'invention.

Dans la description qui va suivre, les mêmes éléments sont désignés par les mêmes références.

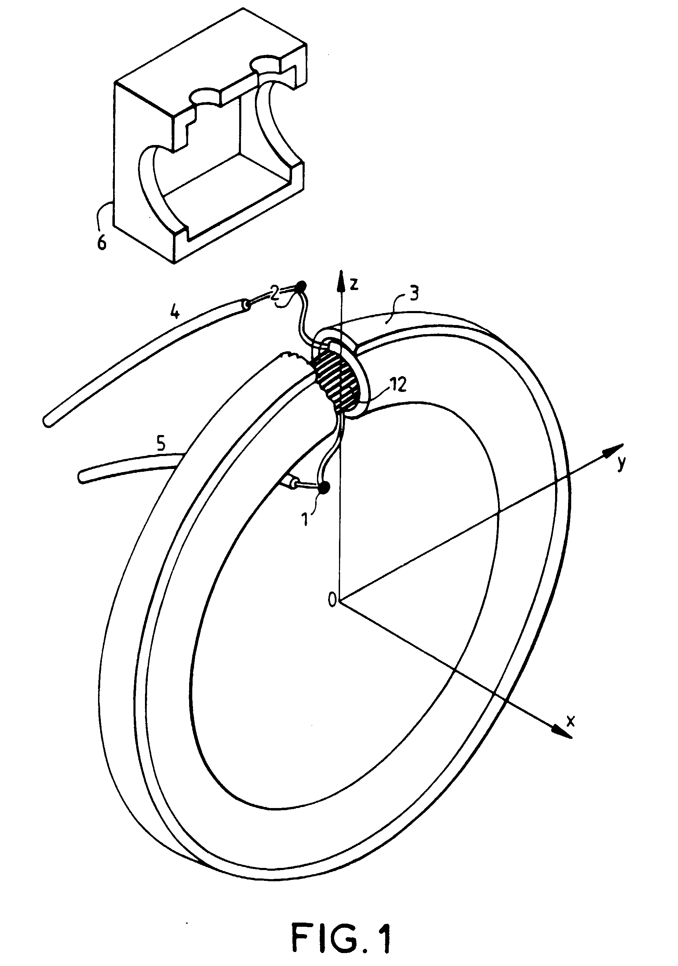

Sur la figure **1**, on peut voir une boucle de démagnétisation en cours de fabrication. L'élément principal est un bobinage en fil émaillé **12** ayant deux extrémités **1** et **2** qui débouchent dans une zone découverte. Une gaine isolante tubulaire **3** emprisonne le bobinage **12,** sauf la zone découverte visible sur la figure **1** dans la direction de l'axe **OZ**. L'axe **OX** est l'axe d'enroulement du bobinage **12** et les autres axes définissent un plan de symétrie **YOZ** du bobinage. Sur la figure **1**, la section transversale de la gaine **3** a été fortement exagérée par rapport à son périmètre pour mettre mieux en évidence les détails de structure.Dans la pratique, le diamètre de la gaine **3** peut être de 9mm tandis que le diamètre du bobinage peut varier de **300** à **1000** mm. A titre d'exemple non limitatif, la gaine **3** est issue d'un ruban de matière plastique thermosoudable qui a été incurvé pour obtenir une forme torique avec recouvrement des bords, lesquels sont ensuite thermosoudés.

Pour faire circuler un courant dans le bobinage **12**, on prévoit un branchement électrique au moyen de deux fils conducteurs isolés **4** et **5** qui sont reliés aux extrémités **1** et **2** du bobinage **12** par soudure tendre ou avec des cosses à sertir autodénudantes. Pour envelopper les connexions électriques dans la zone découverte du bobinage et coiffer les extrémités de la gaine **3**, on peut faire appel à un boitier isolant dont une moitié **6** est représentée sur la figure **1** Deux orifices sont prévus pour enserrer la gaine **3** et deux orifices supplémentaires plus petits servent de passages pour les conducteurs **4** et **5**. A l'intérieur du boitier **6**, on peut prévoir des moyens d'interconnexion électrique et des moyens de retenue de la gaine et des conducteurs. Outre son coût relativement élevé, ce genre de boucle n'est pas étanche, d'où la possibilité de corrosion des parties dénudées du circuit électrique.

Conformément à l'invention, pour former une enveloppe autour des éléments de connexion et de la partie découverte du bobinage et afin qu'elle coiffe les extrémités de la gaine, une technique d'injection de matière thermoplaste est proposée. La matière à injecter dans un moule en deux parties est choisie pour ses qualités d'isolation électrique, pour ses qualités d'adhérence au matériau PVC dont est faite la gaine **3** et pour sa fluidité élevée à la température d'injection. A titre d'exemple non-limitatif, on utilise une colle à base de résine copolyamide, comme celle que l'on utilise dans le procédé d'injection connu sous le vocâble anglo-saxon " HOT MELT " Il s'agit par exemple d'une résine thermofusible, copolyamide pure ayant une densité de **0,98,** un point de ramollissement de **129** à **140°C** (Norme **AFNOR T76106**) et une viscosité Brookfield à **190°C** de **2,5** à **4,0 Pa.s.** Cette résine qui joue le rôle de colle est portée à une température comprise entre **180** et **210°C** en vue d'être injectée dans un moule sous une pression de quelques Bars. Certains matériaux d'injection sous haute pression ne sont pas indiqués, car l'injection sous haute pression peut abîmer le toron de fil émaillé et plier les terminaisons des conducteurs. Ils peuvent alors entrer en court-circuit ou s'approcher trop des parois du moule, ce qui donne lieu à une isolation électrique défectueuse. Il y a lieu de rappeler que la qualité d'isolation exigée d'une boucle de démagnétisation est élevée,du fait de la présence de très hautes tensions sur le tube cathodique.

La réalisation du branchement au moyen de deux conducteurs souples isolés pose un problème de maintien en place des pièces à enrober. Conformément à l'invention , pour réaliser ce branchement, on adopte un câble bifilaire isolé ayant deux conducteurs électriques parallèles dont les gainages sont reliés l'un à l'autre par un intercalaire, par exemple plat, qui les maintient à un écartement constant. L'intercalaire et les gainages sont obtenus par une seule opération d'extrusion, selon le procédé employé pour fabriquer les lignes symétriques utilisées pour la transmission des signaux VHF et UHF. De manière avantageuse, on opte pour un câble à double isolation, c'est à dire que l'on part de deux conducteurs pleins isolés par une première gaine tubulaire et on réalise ensuite l'extrusion d'un ruban isolant qui enrobe les premières gaines et forme l'intercalaire mentionné ci-dessus.

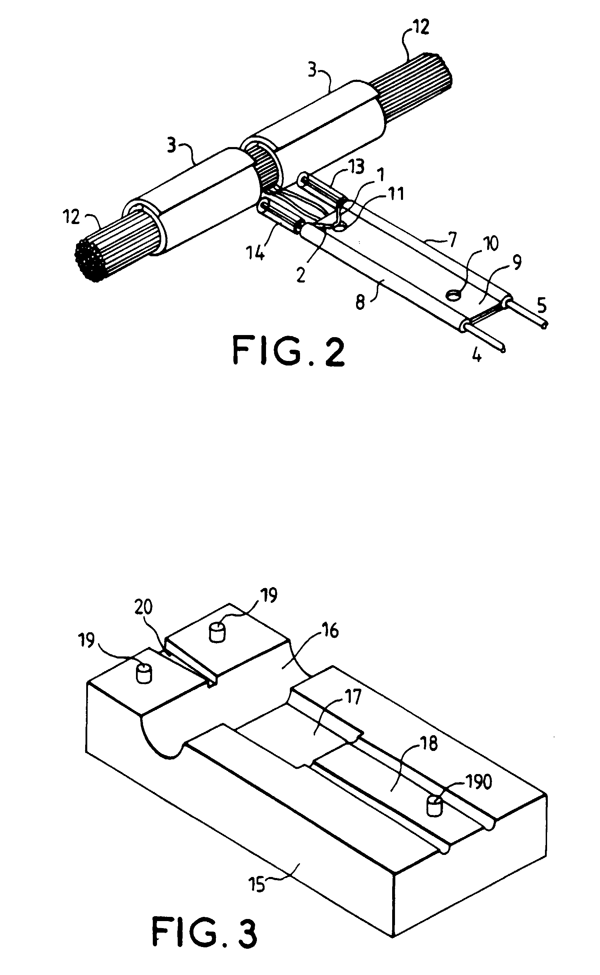

On voit sur la figure **2** une partie de la boucle de démagnétisation dans la zone où le bobinage **12** n'est pas recouvert par la gaine isolante **3**. On voit également le câble bifilaire **9** que l'on présente perpendiculairement au bobinage **12** après que l'on ait dénudé ses deux conducteurs monobrins **4** et **5**. On fait passer les extrémités **1** et **2** du bobinage au travers d'un trou **11** percé dans l'âme du câble **9**, afin de les replier vers le bobinage **12** en venant longer les deux conducteurs **4** et **5** dans leur partie dénudée. Des cosses à sertir autodénudantes **13** et **14** sont enfilées et pincées de façon à établir un contact électrique franc entre le bobinage **12** et les conducteurs **4** et **5**. Les cosses **13** et **14** jouxtent les gainages **7** et **8** du câble **9**, ce qui tend à les maintenir dans le prolongement de ces gainages. Le repliement des fil émaillés du bobinage maintient les cosses **13** et **14** tout près de la gaine **3** dont les extrémités sont plus rapprochées que l'écartement des cosses **13** et **14**. Pour obtenir ce résultat, la boucle et le câble de branchement sont retenus dans des supports formant un gabarit de montage qui n'est pas illustré sur la figure **2**.

La disposition illustrée sur la figure **2** peut faire l'objet d'un enrobage en une seule opération, mais il est préférable d'opérer en deux temps pour améliorer la précision de positionnement des éléments à enrober de matière thermoplaste.

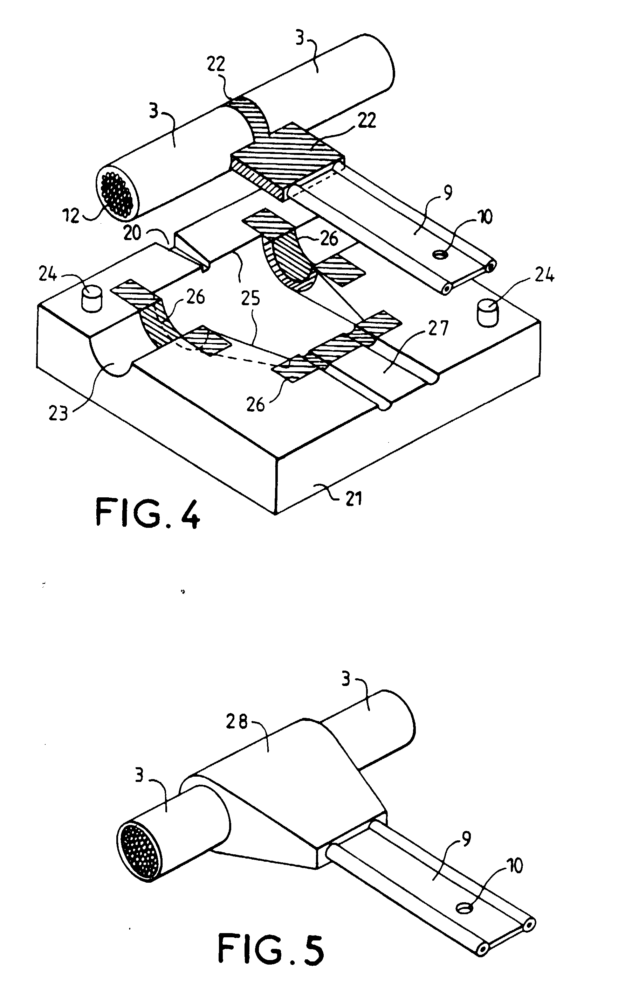

On peut voir sur la figure **3** un demi-moule **15** permettant de réaliser un pré-enrobage de la structure représentée à la figure **2**. Ce pré-enrobage porte la référence **22** sur la figure **4**. Il remplit exactement le vide entre les extrémités de la gaine **3** sans dépassement de diamètre, il enrobe complètement les cosses à sertir **13** et **14** et il enrobe l'extrémité non dénudée du câble **9**, côté bobinage **12**. Ainsi renforçée, la structure de boucle de la figure **4** peut subir le surmoulage final. En revenant à la figure **3**, on voit que ce premier moule de pré-enrobage comprend deux coquilles **15** que l'on emboite grâce à des pions de centrage **19** et **190.** On note la présence d'un logement hémi-cylindrique pour la gaine **3**, d'un logement **18** où s'encastre à mi-hauteur le câble **9** et d'une cavité **17** qui va donner naissance à la partie du pré-enrobage qui s'étend entre la gaine et la partie visible du câble **9** ( voir figure **4** ). Pour assurer un bon positionnement du câble **9** par rapport à la gaine **3**, le pion **190** traverse un orifice **10** du câble **9**. Les orifices **10** et **11** sont créés par la machine qui sert à dénuder l'extrémité du câble **9**. Les coquilles **15** du moule de pré-enrobage viennent encadrer par le bas et par le haut la structure de la figure **2**. Lorsque le moule est fermé, on procède à l'injection de la matière thermoplaste par la buse **20,** qui occupe une position opposée au câble par rapport à la gaine **3**. Si les cosses **13** et **14** sont très proches des parois du moule, au pire, elles peuvent affleurer, mais comme on procède par la suite à un surmoulage, on est sûr que les épaisseurs d'isolant seront respectées. Lorsque la matière a été injectée, elle se solidifie et le moule peut être ouvert en escamotant les deux coquilles **15.** Le pré-enrobage des cosses à sertir peut avoir une hauteur égale au diamètre des cosses et il n'y a pas d'inconvénient à ce que le rapprochement des deux parties du moule exerce un réalignement précis des cosses. En effet, les épaisseurs d'isolant requises seront obtenues lors du surmoulage final. L'injection en deux phases successives est une solution particulièrement avantageuse.

Le procédé " HOT MELT " évoqué ci-dessus utilise un générateur de matière en fusion qui comporte un réservoir à deux étages qui réalisent respectivement la préchauffe et la chauffe de la matière à injecter. Le réservoir alimente une pompe qui transmet la matière chauffée via un tuyau de transport à un pistolet d'injection que l'on applique contre la buse d'injection **20** du moule. La matière liquide est propulsée jusqu'à la vanne du pistolet sous une pression de quelques bars. La commande temporisée de la vanne du pistolet détermine la quantité de matière injectée dans le moule. On contrôle ainsi trois paramètres qui sont: la pression, la température et la durée d'injection. Le pré-enrobage donne naissance à une structure de bonne rigidité, étanche, mais qui n'est pas assez robuste pour l'usage envisagé et qui ne fournit pas les épaisseurs d'isolant requises.

Il s'agit maintenant de passer à la phase finale du procédé qui consiste à surmouler avec une matière thermoplaste une forme plus enveloppante du genre gousset, raccord en té ou manchon à branchement latéral. A titre d'exemple non limitatif, la figure **5** illustre un surmoulage en forme de gousset **28.** Pour réaliser cette forme particulière on utilise deux demi-moules **21** comme illustré sur la figure **4**.

Le demi-moule **21** comporte des orifices hémi-circulaires **23** destinés à recevoir la gaine **3**, une partie en creux **27** qui épouse la forme du câble **9**, afin qu'il s'encastre à moitié et une demi cavité **25** qui donne au gousset **28** sa forme extérieure. Pour éviter des fuites de matière injectée, on a prévu des joints d'étanchéité **26** qui sont encastrés dans le dem-moule près des trois orifices de sortie. Ces joints sont constitués par des pièces en matériau élastomère résistant à la température d'injection. On note aussi la présence de pions **24** qui servent au centrage des deux parties ce second moule et celle d'une buse d'injection **20.** La matière injectée peut être la même que celle utilisée pour un pré-enrobage, mais on peut également choisir une autre matière pour le surmoulage, car la pièce pré-enrobée résiste mieux aux déformations que peut induire l'injection finale.

Le procédé de fabrication qui vient d'être décrit réduit le temps de main d'oeuvre et nécessite une matière première d'un coût raisonnable. Il offre en plus une bonne adhérence du surmoulage avec la gaine sans force de serrage et le produit obtenu est étanche. Enfin cette finition est esthétique, ce qui ne gâte rien.

L'invention n'est pas limitée aux exemples décrits. Elle s'étend aux variantes de réalisation en ce qui concerne la forme de la gaine, le câble bifilaire et la forme donnée au pré-enrobage et au surmoulage final. Le surmoulage final permet d'inscrire en relief les références de la boucle de démagnétisation et les logos d' homologations auxquelles elle a satisfait.

## Revendications

1. Procédé de fabrication d'une boucle de démagnétisation comportant :
- un bobinage (12) d'un câble électrique ayant deux extrémités (1, 2) non isolées,
- un organe de raccordement comprenant un câble bifilaire ayant deux extrémités dénudées,
- deux connexions électriques (13, 14), chaque connexion (13, 14) raccordant une extrémité non isolée du bobinage (12) à une extrémité dénudée de l'organe de raccordement,
- une gaine isolante tubulaire (3) entourant le bobinage (12) sur la presque totalité de son périmètre et laissant une zone découverte où émergent les extrémités non isolées (12),
- et une enveloppe d'isolation de la partie de boucle découverte et des connexions (13, 14),
le procédé de fabrication comportant les étapes de :
- réalisation du bobinage (12) et de sa gaine isolante (3),
- réalisation des connexions électriques (13, 14) entre les extrémités non isolées (1, 2) du bobinage et l'organe de branchement,
et étant caractérisé en ce que le câble bifilaire (9) de l'organe de raccordement est muni d'un isolant électrique formant d'une part une gaine (7, 8) autour de chacun des fils (4, 5) du câble (9) et d'autre part d'un intercalaire reliant mécaniquement entre elles les gaines (7, 8) des fils (4, 5) et espaçant l'un de l'autre les deux fils (4, 5) du câble bifilaire (9), et en ce que la réalisation de l'enveloppe d'isolation (22, 28) de la partie de boucle découverte et des connexions (13, 14) est réalisée par surmoulage par injection à chaud dans un moule (15, 21) d'une matière isolante thermoplaste, cette matière isolant électriquement l'une de l'autre les deux connections électriques (13, 14).

2. Procédé selon la revendication 1, caractérisé en ce que l'enveloppe de surmoulage (22, 28) est réalisée en deux étapes, d'abord il est réalisé par injection à chaud d'une matière thermoplaste au moyen d'un premier moule (15), un pré-enrobage (22) des connections électriques (13, 14) et de la zone découverte du bobinage (12), ensuite il est réalisé par injection à chaud d'une matière thermoplaste au moyen d'un second moule (21), une enveloppe (28) du pré-enrobage (22).

3. Procédé selon l'une quelconque des revendications précédentes, caractérisé en ce que ledit intercalaire est plat et en ce qu'un orifice (11) percé dans l'intercalaire plat reçoit les extrémités (1, 2) dudit bobinage (12) en vue de leur repliement.

4. Procédé selon l'une quelconque des revendications précédentes, caractérisé en ce que le positionnement des pièces à envelopper par injection est réalisé au moyen d'un orifice (10) percé dans l'intercalaire dudit câble bifilaire (9).

5. Procédé selon l'une quelconque des revendications précédentes, caractérisé en ce que la réalisation des connections (13, 14) consiste à souder avec un métal d'apport les extrémités (1, 2) du bobinage (12) aux extrémités des conducteurs (4, 5) dudit câble bifilaire.

6. procédé selon l'une quelconque des revendications 1 à 4, caractérisé en ce que la réalisation des connexions (13, 14) consiste à relier les extrémités (1, 2) dudit bobinage (12) aux extrémités des conducteurs (4, 5) dudit câble bifilaire (9) avec une paire de cosses à sertir (13, 14).

7. Procédé selon l'une quelconque des revendications précédentes, caractérisé en ce que les conducteurs électriques (4, 5) dudit câble bifilaire (9) sont monobrins.

8. Procédé selon l'une des revendications 1 ou 3 à 7, caractérisé en ce que le moule d'injection de matière thermoplaste est en deux parties (15, 23) et comporte un premier volume (16, 25) conformé pour recevoir une partie du bobinage (12), un second volume (18, 27) du moule conformé pour recevoir le câble bifilaire (9) et une buse d'injection (20) dirigée vers ledit premier volume (16, 25) et situé du côté opposé au second volume (18, 27).

9. Procédé selon l'une quelconque des revendications 2 à 7, caractérisé en ce que chacun des moules d'injection de matière thermoplaste est en deux parties (15, 23) et comporte un premier volume (16, 25) conformé pour recevoir une partie du bobinage (12) un second volume (18, 27) du moule conformé pour recevoir le câble bifilaire (9) et une buse d'injection (20) dirigée vers ledit premier volume (16, 25) et située du côté opposé au second volume (18, 27).

10. Procédé selon l'une quelconque des revendications précédentes, caractérisé en ce que ladite matière isolante thermoplaste est à base de résine copolyamide.

11. Procédé selon la revendication 10, caractérisé en ce que la gaine isolante tubulaire (3) du bobinage (12) est en PVC ainsi que l'isolant électrique formant gaine (7, 8) et intercalaire entre les fils (4, 5) du câble bifilaire (9) de l'organe de raccordement.

12. Boucle de démagnétisation comportant :
- un premier câble électrique isolé ayant deux extrémités (1, 2) non isolées et formant un bobinage (12),
- une première enveloppe isolante tubulaire (3) couvrant la presque totalité du bobinage (12), mais laissant une zone découverte d'où émergent les extrémités (1, 2) non isolées,
- un organe de raccordement comportant un câble bifilaire ayant deux extrémités dénudées,
- deux connexions électriques (13, 14), chaque connexion raccordant une extrémité (1, 2) non isolée du bobinage (12) à une extrémité dénudée de l'organe de raccordement,
- une seconde enveloppe isolante enveloppant la partie découverte du bobinage (12) et les deux connexions électriques (13, 14), boucle de démagnétisation, caractérisée en ce que l'organe de raccordement comporte un câble bifilaire (9) muni d'un isolant électrique formant d'une part une gaine (7, 8) autour de chacun des fils (4, 5) du câble bifilaire (9) et d'autre part un intercalaire reliant mécaniquement les gaines (7, 8) des fils (4, 5) et espaçant l'un de l'autre les deux fils (4, 5) du câble bifilaire (9), cet intercalaire du câble bifilaire (9) étant présent jusqu'au point où les deux fils (4, 5) sont dénudés et caractérisé également en ce que la seconde enveloppe (22, 28) est constituée par un bloc de matière isolante thermoplaste isolant électriquement l'une de l'autre les deux connexions électriques (13, 14).

13. Boucle selon la revendication 12, caractérisée en ce que le bloc constituant ladite seconde enveloppe (22, 28) est constitué de deux blocs (22, 28), un bloc interne (22) enveloppant la zone découverte du bobinage et isolant électriquement l'une de l'autre les deux connexions (13, 14), et un bloc externe (28) enveloppant le bloc interne (22).

14. Boucle selon la revendication 12, caractérisée en ce que la liaison électrique entre les extrémités (1, 2) dudit bobinage (12) et les conducteurs (4, 5) dudit câble bifilaire (9) est réalisée avec des cosses à sertir (13, 14).

15. Boucle selon la revendication 13, caractérisée en ce que la liaison électrique entre les extrémités (1, 2) dudit bobinage (12) et les conducteurs (4, 5) dudit câble bifilaire (9) est réalisée avec des cosses à sertir (13, 14).

16. Boucle selon la revendication 15, caractérisée en ce que lesdites cosses à sertir (13, 14) sont noyées dans ledit premier bloc (22) et affleurent la surface de celui-ci.

17. Boucle selon l'une quelconque des revendications 12 à 16, caractérisée en ce que ledit intercalaire est de forme plate.

18. Boucle selon la revendication 17, caractérisée en ce que ledit intercalaire comporte un orifice (11) traversé par les extrémités (1, 2) dudit bobinage (12) pour retenir ledit câble (9) à proximité de ladite gaine (3).

19. Boucle selon l'une des revendications 17 ou 18, caractérisée en ce que ledit intercalaire comporte un orifice (10) destiné au repérage mécanique dans un moule (15, 21) servant à l'injection de ladite seconde enveloppe (22, 28).

## Patentansprüche

1. Verfahren zur Herstellung einer Entmagnetisierungsspule, die folgendes aufweist:
- eine Spulenwicklung (12) aus einem elektrischen Kabel mit zwei nicht isolierten Enden (1, 2),
- eine Anschlußeinrichtung, die ein zweiadriges Kabel mit zwei abisolierten Enden aufweist,
- zwei elektrischen Verbindungen (13, 14), wobei jede Verbindung (13, 14) ein nicht isoliertes Ende der Spulenwicklung (12) mit einem abisolierten Ende der Anschlußeinrichtung verbindet,
- einen isolierenden, röhrenföhrmigen Mantel (3), der die Spulenwicklung (12) auf fast ihrem ganzen Umfang umgibt und einen Bereich frei läßt, an dem die nicht isolierten Enden (1, 2) austreten,
- und eine Umhüllung zur Isolierung des freiliegenden Spulenteils und der Verbindungen (13, 14),
wobei das Verfahren die folgenden Verfahrensschritte aufweist:
- Herstellung der Spulenwicklung (12) und ihres isolierenden Mantels (3),
- Herstellung der elektrischen Verbindungen (13, 14) zwischen den nicht isolierten Enden (1, 2) der Spulenwicklung und der Anschlußeinrichtung,
und dadurch gekennzeichnet ist, daß das zweiadrige Kabel (9) der Anschlußeinrichtung mit einer elektrischen Isolierung versehen ist, die einerseits einen Mantel (7, 8) um jeden der Drähte (4, 5) des Kabels (9) und andererseits ein Zwischenstück bildet, das die Mäntel (7, 8) der Drähte (4, 5) untereinander mechanisch verbindet und die beiden Drähte (4, 5) des zweiadrigen Kabels (9) zueinander beabstandet hält, und dadurch, daß die Herstellung der Umhüllung (22, 28) zur Isolierung des freiliegenden Spulenteils und der Verbindungen (13, 14) durch Aufformung durch Warmeinspritzen eines isolierenden, thermoplastischen Materials in eine Form (15, 21) hergestellt wird, wobei dieses Material die beiden elektrischen Verbindungen (13, 14) gegeneinander elektrisch isoliert.

2. Verfahren nach Anspruch 1, dadurch gekennzeichnet, dass die aufgeformte Umhüllung (22, 28) in zwei Schritten hergestellt wird, wobei zuerst durch Wärmeeinspritzen eines thermoplastischen Materials in eine erste Form eine Vorumhüllung (22) der elektrischen Verbindungen (13, 14) und des freiliegenden Bereiches hergestellt wird, und anschließend durch Warmeinspritzen eines thermoplastischen Materials unter Zuhilfenahme einer zweiten Form (21), eine Umhüllung (28) der Vorumhüllung (22) hergestellt wird.

3. Verfahren nach einem der vorhergehenden Ansprüche, dadurch gekennzeichnet, daß das Zwischenstück flach ist, und dadurch, daß eine durch das flache Zwischenstück gebohrte Öffnung (11) die Enden (1, 2) der Spulenwicklung (12) im Hinblick auf ihr Umbiegen aufnimmt.

4. Verfahren nach einem der vorhergehenden Ansprüche, dadurch gekennzeichnet, daß die Positionierung der durch Einspritzen zu umhüllenden Teile unter Zuhilfenahme einer durch das Zwischenstück des zweiadrigen Kabels (9) gebohrten Öffnung (10) hergestellt wird.

5. Verfahren nach einem der vorhergehenden Ansprüche, dadurch gekennzeichnet, daß die Herstellung der Verbindungen (13, 14) darin besteht, mit einem Lot die Enden (1, 2) der Spulenwicklung (12) mit den Enden der Leiter (4, 5) des zweiadrigen Kabels zu verlöten.

6. Verfahren nach einem der Ansprüche 1 bis 4, dadurch gekennzeichnet, daß die Herstellung der Verbindungen (13, 14) darin besteht, die Enden (1, 2) der Spulenwicklung (12) mit den Enden der Leiter (4, 5) des zweiadrigen Kabels (9) mit einem Paar Quetschkabelschuhen (13, 14) zu verbinden.

7. Verfahren nach einem der vorhergehenden Ansprüche, dadurch gekennzeichnet, daß die elektrischen Leiter (4, 5) des zweiadrigen Kables (9) aus einzelnen Drähten bestehen.

8. Verfahren nach einem der Ansprüche 1 oder 3 bis 7, dadurch gekennzeichnet, daß die Form zum Einspritzen thermoplastischen Materials aus zwei Teilen (15, 23) besteht und folgendes aufweist: ein erstes Volumen (16, 25), das dafür ausgebildet ist, einen Teil der Spulenwicklung (12) aufzunehmen, ein zweites Volumen (18, 27), das dafür ausgebildet ist, das zweiadrige Kabel (9) aufzunehmen, und eine Spritzdüse (20), die auf das erste Volumen (16, 25) gerichtet ist und sich auf der dem zweiten Volumen (18, 27) gegenüberliegenden Seite befindet.

9. Verfahren nach einem der Ansprüche 2 bis 7, dadurch gekennzeichnet, daß jede der Formen zum Einspritzen thermoplastischen Materials aus zwei Teilen (15, 23) besteht und folgendes aufweist: ein erstes Volumen (16, 25), das dafür ausgebildet ist, einen Teil der Spulenwicklung (12) aufzunehmen, ein zweites Volumen (18, 27), das dafür ausgebildet ist, das zweiadrige Kabel (9) aufzunehmen, und eine Spritzdüse (20), die auf das erste Volumen (16, 25) gerichtet ist und sich auf der dem zweiten Volumen (18, 27) gegenüberliegenden Seite befindet.

10. Verfahren nach einem der vorhergehenden Ansprüche, dadurch gekennzeichnet, daß das isolierende thermoplastische Material auf Copolyamid-Kunststoffbasis beruht.

11. Verfahren nach Anspruch 10, dadurch gekennzeichnet, daß der isolierende, röhrenförmige Mantel (3) der Spulenwicklung (12) aus PVC besteht ebenso wie der elektrische Isolator, der den Mantel (7, 8) und das Zwischenstück zwischen den Drähten (4, 5) des zweiadrigen Kabels (9) der Anschlußeinrichtung bildet.

12. Entmagnetisierungsspule, die folgendes aufweist:
- ein erstes isoliertes, elektrisches Kabel, das zwei nicht isolierte Enden (1, 2) aufweist und eine Spulenwicklung (12) bildet,
- eine erste röhrenförmige, isolierende Umhüllung (3), die fast die ganze Spulenwicklung (12) bedeckt, aber einen Bereich frei läßt, an dem die nicht isolierten Enden (1, 2) austreten,
- eine Anschlußeinrichtung, die ein zweiadriges Kabel mit zwei abisolierten Enden aufweist,
- zwei elektrische Verbindungen (13, 14), wobei jede Verbindung ein nicht isoliertes Ende (1, 2) der Spulenwicklung (12) mit einem abisolierten Ende der Anschlußeinrichtung verbindet,
- eine zweite isolierende Umhüllung, die den freiliegenden Teil der Spulenwicklung (12) und die zwei elektrischen Verbindungen (13, 14) umhüllt, wobei die Entmagnetisierungsspule dadurch gekennzeichnet ist, daß die Anschlußeinrichtung ein zweiadriges Kabel (9) aufweist, das mit einem elektrischen Isolator versehen ist, der einerseits einen Mantel (7, 8) um jeden der Drähte (4, 5) des zweiadrigen Kabels (9) und andererseits ein Zwischenstück bildet, das die Mäntel (7, 8) der Drähte (4, 5) mechanisch verbindet und die beiden Drähte (4, 5) des zweiadrigen Kabels (9) zueinander auf Abstand hält, wobei dieses Zwischenstück des zweiadrigen Kabels (9) bis zu dem Punkt vorhanden ist, an dem die beiden Drähte (4, 5) abisoliert sind, und ebenfalls dadurch gekennzeichnet ist, daß die zweite Umhüllung (22, 28) aus einem Block aus isolierendem, thermoplastischen Material besteht, der die beiden elektrischen Verbindungen (13, 14) gegenseitig zueinander elektrisch isoliert.

13. Spule nach Anspruch 12, dadurch gekennzeichnet, daß der Block, der die zweite Umhüllung (22, 28) bildet, aus zwei Blöcken (22, 28) besteht, einem inneren Block (22), der den freiliegenden Bereich der Spulenwicklung umhüllt und die zwei Verbindungen (13, 14) gegeneinander elektrisch isoliert, und einem äußeren Block (28), der den inneren Block (22) umhüllt.

14. Spule nach Anspruch 12, dadurch gekennzeichnet, daß die elektrische Verbindung zwischen den Enden (1, 2) der Spulenwicklung (12) und den Leitern (4, 5) des zweiadrigen Kabels (9) mit Quetschkabelschuhen (13, 14) hergestellt wird.

15. Spule nach Anspruch 13, dadurch gekennzeichnet, daß die elektrische Verbindung zwischen den Enden (1, 2) der Spulenwicklung (12) und den Leitern (4, 5) des zweiadrigen Kabels (9) mit Quetschkabelschuhen (13, 14) hergestellt wird.

16. Spule nach Anspruch 15, dadurch gekennzeichnet, daß die Quetschkabelschuhe (13, 14) in dem ersten Block (22) versenkt sind und bündig zu dessen Oberfläche liegen.

17. Spule nach einem der Ansprüche 12 bis 16, dadurch gekennzeichnet, daß das Zwischenstück von flacher Form ist.

18. Spule nach Anspruch 17, dadurch gekennzeichnet, daß das Zwischenstück eine Öffnung (11) aufweist, die von den Enden (1, 2) der Spulenwicklung (12) durchquert wird, um das Kabel (9) in der Nähe des Mantels (3) zu halten.

19. Spule nach einem der Ansprüche 17 oder 18, dadurch gekennzeichnet, daß das Zwischenstück eine Öffnung (10) aufweist, die zum mechanischen Einpassen in eine Form (15, 21) bestimmt ist, die zum Einspritzen der zweiten Umhüllung (22, 28) dient.

## Claims

1. Method of manufacturing a degaussing loop, including:
- a coil (12) of an electrical cable having two non-insulated ends (1,2),
- a connecting member which comprises a bifilar cable having two stripped ends,
- two electrical connections (13,14), each connection (13,14) connecting a non-insulated end of the coil (12) to a stripped end of the connecting member,
- a tubular insulating sheath (3) which surrounds the coil (12) over virtually all of its perimeter and leaves an uncovered region where the non-insulated ends (12) emerge,
- and a casing for insulating the uncovered loop part and the connections (13,14),
the manufacturing method including the steps of:
- producing the coil (12) and its insulating sheath (3),
- producing the electrical connections (13,14) between the non-insulated ends (1,2) of the coil and the branching member,
and being characterized in that the bifilar cable (9) of the connecting member is provided with an electrical insulatant forming, on the one hand, a sheath (7,8) around each of the wires (4,5) of the cable (9) and, on the other hand, a spacer mechanically connecting together the sheaths (7,8) of the wires (4,5) and spacing the two wires (4,5) of the bifilar cable (9) apart, and in that the insulating casing (22,28) of the uncovered loop part and the connections (13,14) are produced by hot injection overmoulding in a mould (15,21) of a thermoplastic insulating material, this material electrically insulating the two electrical connections (13,14) from one another.

2. Method according to Claim 1, characterized in that the overmoulding casing (22,28) is produced in two steps, firstly it is produced by hot injection of a thermoplastic material by means of a first mould a precoating (22) of electrical connections (13,14) and of the uncovered region of the coil (12), then it is produced by hot injection of a thermoplastic material by means of a second mould (21), a casing (28) of the precoating (22).

3. Method according to either of the preceding claims, characterized in that the said spacer is flat and in that an orifice (11) pierced in the flat spacer receives the ends (1,2) of the said coil (12) for the purpose of folding them.

4. Method according to any one of the preceding claims, characterized in that the positioning of the pieces to be encased by injection is achieved by means of an orifice (10) pierced in the spacer of the said bifilar cable (9).

5. Method according to any one of the preceding claims, characterized in that the formation of the connections (13,14) consists in soldering, with a filler metal, the ends (1,2) of the coil (12) to the ends of the conductors (4,5) of the said bifilar cable.

6. Method according to any one of Claims 1 to 4, characterized in that the formation of the connections (13,14) consists in connecting the ends (1,2) of the said coil (12) to the ends of the conductors (4,5) of the said bifilar cable (9) with a pair of crimping lugs (13,14).

7. Method according to any one of the preceding claims, characterized in that the electrical conductors (4,5) of the said bifilar cable (9) are single-strand conductors.

8. Method according to one of Claims 1 or 3 to 7, characterized in that the mould for injecting thermoplastic material is made in two parts (15,23) and includes a first volume (16,25) shaped so as to receive part of the coil (12), a second volume (18,27) of the mould shaped so as to receive the bifilar cable (9) and an injection nozzle (20) directed towards the said first volume (16,25) and lying on the side opposite the second volume (18,27).

9. Method according to one of Claims 2 to 7, characterized in that each of the moulds for injecting thermoplastic material is made in two parts (15,23) and includes a first volume (16,25) shaped so as to receive part of the coil (12), a second volume (18,27) shaped so as to receive the bifilar cable (9) and an injection nozzle (20) directed towards the said first volume (16,25) and lying on the side opposite the second volume (18,27).

10. Method according to any one of the preceding claims, characterized in that the said thermoplastic insulating material is based on copolyamide resin.

11. Method according to Claim 10, characterized in that the tubular insulating sheath (3) of the coil (12) is made of PVC, as is the electrical insulant forming the sheath (7,8) and the insert between the wires (4,5) of the bifilar cable (9) of the connecting member.

12. Degaussing loop which includes:
- a first insulated electrical cable having two non-insulated ends (1,2) and forming a coil (12),
- a first tubular insulating casing (3) covering almost the entire coil (12) but leaving an uncovered region from which the non-insulated ends (1,2) emerge,
- a connecting member which includes a bifilar cable having two stripped ends,
- two electrical connections (13,14), each connection connecting a non-insulated end (1,2) of the coil (12) to a stripped end of the connecting member,
- a second insulating casing which encases the uncovered part of the coil (12) and the two electrical connections (13,14), degaussing loop, characterized in that the connecting member includes a bifilar cable (9) provided with an electrical insulant forming, on the one hand, a sheath (7,8) around each of the wires (4,5) for the bifilar cable (9) and, on the other hand, an insert mechanically connecting the sheaths (7,8) of the wires (4,5) and spacing the two wires (4,5) of the bifilar cable (9) apart, this insert of the bifilar cable (9) being present right up to the point where the two wires (4,5) are stripped, and also characterized in that the second casing (22,28) consists of a block of thermoplastic insulating material which electrically insulates the two electrical connections (13, 14) from each other.

13. Loop according to Claim 12, characterized in that the block constituting the said second casing (22,28) consists of two blocks (22,28), an internal block (22) encasing the uncovered region of the coil and electrically insulating the two connections (13,14) from each other, and an external block (28) encasing the internal block (22).

14. Loop according to Claim 12, characterized in that the electrical link between the ends (1,2) of the said coil (12) and the conductors (4,5) of the said bifilar cable (9) is formed with crimping lugs (13,14).

15. Loop according to Claim 13, characterized in that the electrical link between the ends (1,2) of the said coil (12) and the conductors (4,5) of the said bifilar cable (9) is made with crimping lugs (13,14).

16. Loop according to Claim 15, characterized in that the said crimping lugs (13,14) are buried in the said first block (22) and come flush with the surface thereof.

17. Loop according to any one of Claims 12 to 16, characterized in that the said spacer is flat in shape.

18. Loop according to Claim 17, characterized in that the said spacer includes an orifice (11) traversed by the ends (1,2) of the said coil (12) in order to retain the said cable (9) close to the said sheath (3).

19. Loop according to either of Claims 17 and 18, characterized in that the said spacer includes an orifice (10) intended for mechanical indexing in a mould (15,21) serving for injection of the said second casing (22,28).
